# EUROPÄISCHE PATENTSCHRIFT

(11) **EP 2 576 180 B1**
(45) Veröffentlichungstag und Bekanntmachung des Hinweises auf die Patenterteilung: **08.01.2014**
(21) Anmeldenummer: 11725395.5
(22) Anmeldetag: 01.06.2011
(51) Int. Cl.: B29C 47/00, B29C 47/68

(54) **FILTRIERVORRICHTUNG FÜR HOCHVISKOSE MEDIEN**
FILTERING APPARATUS FOR HIGHLY VISCOUS MEDIA
DISPOSITIF DE FILTRATION POUR MATÉRIAU VISQUEUX

(30) Priorität: 01.06.2010 DE 102010029591
(43) Veröffentlichungstag der Anmeldung: 10.04.2013
(73) Patentinhaber: Kreyenborg Verwaltungen und Beteiligungen GmbH & Co. KG, 48157 Münster (DE)
(72) Erfinder: WÖSTMANN, Stefan, 48336 Sassenberg (DE); HARTMANN, Frank, 48565 Steinfurt (DE); MIDDLER, Robert, 48329 Havixbeck (DE)
(74) Vertreter: Tarvenkorn, Oliver
(86) Internationale Anmeldenummer: PCT/EP2011/059110
(87) Internationale Veröffentlichungsnummer: WO 2011/151398

(56) Entgegenhaltungen:
- WO-A1-2004/026432
- WO-A1-2005/084917
- DE-U1- 20 319 832

## Beschreibung

Die Erfindung betrifft eine Filtriervorrichtung für hochviskose Medien mit den Merkmalen des Oberbegriffs des Anspruchs 1

Solche Filtriervorrichtungen sind beispielsweise aus der DE 102 54 022 A1 oder der DE 103 17 170 A1 bekannt. Sie besitzen insbesondere entweder zwei Siebbolzen mit jeweils einer Siebstelle oder einen Siebbolzen mit zwei Siebstellen. Hierdurch wird es ermöglicht, eine der Siebstellen im Produktionsbetrieb zu halten, während die andere gereinigt wird. Eine solche Filtriervorrichtung erlaubt daher einen kontinuierlichen Betrieb einer Anlage, in der ein hochviskoses Medium, insbesondere eine Kunststoffschmelze, gereinigt werden muss.

Die WO 2004/026432 A1 offenbart eine Vorrichtung mit einem Austrittskanal, der eine Eintrittszone, eine Umlenkungsstelle und eine Austrittszone umfasst. Die Eintrittszone geht von einem Randbereich eines Trichterabschnitts aus. Die Austrittszone ist als eine sich auf der Außenseite des Siebbolzens und/oder auf der Innenseite der Siebbolzenbohrung erstreckende Nut ausgebildet. Die Umlenkstelle liegt im Gehäuse. Je nach der axialen Position des Siebbolzens steht jedoch nicht immer ein Bereich der Austrittszone mit dem Austrittskanal in Verbindung.

Die DE 203 19 832 U1 offenbart eine Vorrichtung, die eine ähnliche Nut auf der Außenseite des Siebbolzens aufweist. Diese Nut verbindet zwei Austrittskanäle an einer Umlenkstelle, jedoch vor der entsprechenden Austrittszone. Mit der Nut sind beide Kanäle gleichzeitig nutzbar, z.B. bei einer Rückspülung.

Obwohl sich die bekannten Filtriervorrichtungen bewährt haben, kann es insbesondere beim Filtrieren von Kunststoffschmelzen zu einem partiellen Materialabbau kommen, der dazu führt, dass die Schmelze auf der Reinseite des Siebes partiell verkohlt, wodurch gerade bei transparenten Kunststoffen Fehlstellen gebildet werden. Diese Probleme treten insbesondere auf, wenn geringe Anlagendurchsätze größere Filterflächen erforderlich machen, weil besonders fein gefilterte werden soll.

Diese Zersetzungsprozesse sind darauf zurückzuführen, dass das zu filternde Medium in der Filtriervorrichtung heiß gehalten werden muss, um die Viskosität des Mediums so niedrig wie möglich zu halten und damit mit nur einem vergleichsweise geringen Druck das Medium durch die Filtereinsätze pressen zu können.

Im normalen, zügigen Durchlauf mit definierter Strömungsgeschwindigkeit wirkt sich der Temperatureinfluss noch nicht zersetzend aus. Die oben beschriebenen Störungen können jedoch dann auftreten, wenn sich bei bestimmten rheologischen Eigenschaften des Mediums innerhalb der Fließkanäle Strömungszonen ausbilden, in denen Schmelze über längere Zeit verweilt und dem Temperatureinfluss ausgesetzt ist.

Beide bekannten Varianten von kontinuierlichen Siebwechslern benötigen immer mehrere und auch größere Fließkanäle, die zusammen ein relativ großes Volumen besitzen, was wiederum geringere Strömungsgeschwindigkeiten bzw. höhere Verweilzeiten des Mediums nach sich zieht.

Neben den strömungstechnischen Überlegungen spielen Herstellungskosten eine Rolle. In der Regel besitzen kontinuierlich arbeitende Siebwechsler zwei Siebbolzen mit je einer Siebstelle. Dafür müssen größere Gehäuse vorgesehen und zwei Passungen zwischen Gehäusebohrung und Siebbolzen hergestellt werden. Weiterhin werden zum Verschieben der Siebbolzen zwei Hydraulikeinheiten benötigt usw.

Aufgabe der vorliegenden Erfindung ist es somit, solche Verweilzonen, auch Totwasserzonen genannt, zu reduzieren, um möglichst den gesamtem Volumenbereich innerhalb der Siebkavitäten gleichmäßig durchspülen zu lassen und eine gleichmäßige Verweilzeit für alle Stromfäden einer Strömung durch den Siebbolzen zu erreichen. Weitere Aufgabe ist es, eine kostengünstigere Bauweise einer kontinuierlich zu betreibenden Filtriervorrichtung zu ermöglichen.

Diese Aufgabe wird gemäß der vorliegenden Erfindung durch eine Filtriervorrichtung mit den Merkmalen des Anspruchs 1 gelöst.

Erfindungswesentlich ist daran, dass die Eintrittszone des Austrittskanals auf der Reinseite eines Siebelements in der Siebkavität exzentrisch angeordnet ist, nämlich in einem Randbereich des sich verjüngenden Trichterabschnitts, der sich insbesondere ganz bis an die Peripherie der Siebkavität erstreckt. Hierdurch wird dem filtrierten Medium eine solche Strömungsrichtung aufgezwungen, die verhindert, dass Schmelze oder ein anders Medium in einem seitlichen Randbereich verwirbelt wird und somit dort länger verweilt, als die zentralen Strömungsfäden.

"Trichterförmig" bezeichnet im Sinne der vorliegenden Erfindung nicht nur die Form eines Kegelstumpfes, sondern schließt auch andere sich verjüngende Formen ein, die geeignet sind, das Fluid von einer großen Querschnittsfläche hinter dem Filterelement zu kanalisieren und der Eintrittszone des Kanals zuzuführen.

Weiterhin ist erfindungsgemäß vorgesehen, dass der Austrittskanal eine Austrittszone besitzt, welche als eine Nut ausgebildet ist, die sich axial erstreckt und zwar:
- entweder nur außen am Mantel des insbesondere zylindrischen Siebbolzens
- oder nur in der Wandung der Siebbolzenbohrung
- oder auf beiden Seiten, so dass sich Teilnuten ergeben, die sich in Produktionsstellung des Siebbolzens zu einer Gesamtnut ergänzen und in anderen Stellungen teilweise überlappen.

Zwischen der Eintrittszone, welche sich an den Trichterabschnitt hinter der Siebstelle anschließt, und der nutförmigen Austrittszone ist eine Umlenkstelle vorgesehen. Ein- und Austrittszone schneiden sich im Bereich einer Umlenkstelle und schließen dort einen Winkel zwischen 30° und 90° ein. Durch die erzwungene scharfe Umlenkung wird die Vermischung des Mediums abermals verbessert.

Vorzugsweise ist vorgesehen, dass die Eintrittszone des Siebbolzenaustrittskanals im Querschnitt gesehen dreieckig ist. Die dreieckige Eintrittszone wird durch eine erste Flanke begrenzt, die sich an die zentrale Spitze des Trichterbereichs anschließt und von dort nach außen hin führt. Diese erste Flanke streckt sich vorzugsweise in Verlängerung der kegelförmigen Wand des Trichterbereichs, sodass im Querschnitt gesehen ein nahtloser Übergang aus dem Trichterbereich in die Eintrittszone des Siebbolzenaustrittskanals erfolgt. Die andere Begrenzung der Eintrittszone wird bevorzugt durch eine zweite Flanke gebildet, welche in Durchflussrichtung ausgerichtet ist und sich unmittelbar an den Außenumfang des Siebelements anschließt. Diese Flanke erstreckt sich also- wiederum im Querschnitt durch den Siebbolzen gesehen - nahezu in Verlängerung der äußeren Begrenzung der Siebkavität. Dabei ist lediglich ein kleiner Absatz notwendig, um das in die Siebkavität eingesetzte Siebelement abzustützen.

Die vorstehenden Beschreibungen beziehen sich auf einen Querschnitt, der in der Ebene der Mittelachse liegt und dabei auch die gehäuseseitigen Zu- und Ablaufbohrungen schneidet.

In einer Schnittebene quer durch den Siebbolzen und längs durch eine der Siebkavitäten erscheint die Eintrittszone dann wie eine Scheibe, welche an den hohlkegelförmigen Trichterbereich der Siebkavität angesetzt ist.

Die beschriebene, bevorzugte Ausbildung der Eintrittszone mit der schrägen Flanke hat folgende strömungstechnische Vorteile:
Die exzentrische Anordnung des Austrittskanals, zumindest des Bereichs des Austrittskanals bis zu der Umlenkstelle, erfolgt der Durchfluss durch die Siebkavität nicht nur in der Gehäusedurchflussrichtung, sondern es wird innerhalb der Siebkavität ein deutlicher seitlicher Drall erzeugt der der Bildung von Verwirbelungen entgegen wirkt.

Durch die schräge Flanke wird auch der Bereich der Wandhaftung der Schmelze verlängert. Solange der Einfluss der Wandhaftung nämlich stark genug auf die fließende Schmelze wirkt, bleibt die Strömung laminar.

Die erfindungsgemäße Bauweise führt nicht nur zu einer vorteilhaften Filtriervorrichtung mit zwei Siebbolzen und je einer Siebstelle, sondern sie ermöglicht insbesondere auch den Bau einer Filtriervorrichtung mit nur einem Siebbolzen und zwei Siebstellen. Hierdurch können erhebliche Kosten bei der Herstellung eingespart werden. Die Bauweise mit nur einem Bolzen wird einmal durch die nutförmige Austrittszone ermöglicht. Diese führt dazu, dass unabhängig von der axialen Position des Siebbolzens immer ein Bereich von ihr mit dem Gehäuseaustrittskanal in Verbindung steht, also auch dann, wenn eine Siebstelle zur Reinigung aus dem Gehäuse heraus gefahren worden ist.

Um große Filterflächen bereit stellen zu können, ist es vorteilhaft, wenn zwei unabhängig voneinander im Gehäuse verschiebbare Siebbolzen mit je zwei Paaren von Siebkavitäten vorgesehen sind. Die Siebkavitäten eines Paars sind dabei an gegenüberliegenden Seiten der Siebbolzen angeordnet. Auf diese Weise wird eine Filtriervorrichtung mit insgesamt acht Siebkavitäten bereit gestellt.

Bei der erfindungsgemäßen Filtriervorrichtung können mit Vorteil auch ovale und andere langgestreckte Formen von Filterelementen verwendet werden und dementsprechend die Siebkavitäten länglich ausgebildet werden. Die erfindungsgemäße Strömungslenkung begünstigt eine Strömung, die in der Austrittszone der Längserstreckung der Siebkavität folgt. Anders als bei einer zentralen Ausströmung aus der Siebkavität in die Gehäuseaustrittskanäle nach dem Stand der Technik besteht bei der erfindungsgemäßen Ausbildung selbst bei sehr lang gestreckten Siebkavitäten keine Gefahr der Bildung von Totwasserzonen in Randbereichen.

Die erfindungsgemäße Strömungsumlenkung wirkt sich nicht nur in der normalen Betriebsstellung vorteilhaft aus, sondern gerade auch in der Siebwechselstellung, denn anders als bei bekannten Vorrichtungen, die mehrere Siebbolzenaustrittskanäle je Siebstelle vorsehen, von denen in Siebwechselstellung nur einer betriebsbereit bleibt und bei dessen anderem Kanal die Schmelze bewegungslos verweilt, kommt es bei der erfindungsgemäß Filtriervorrichtung wegen der stets vor dem Gehäuseaustrittskanal liegenden Austrittszone zu keiner wesentlichen Reduktion des auslaufseitigen Strömungsquerschnitts und zu keiner negativen Veränderung der Strömung auf der Siebreinseite.

Die Erfindung wird nachfolgend mit Bezug auf die Zeichnungen näher erläutert. Die Figuren zeigen im Einzelnen:
- Fig. 1: eine Filtriervorrichtung gemäß einer ersten Ausführungsform im Schnitt in Produktionsstellung;
- Fig. 2: die Filtriervorrichtung gemäß Fig. 1 in einer um 90° versetzten Schnittebene;
- Fig. 3: die Filtriervorrichtung gemäß Fig. 1 in Siebwechselstellung von oben im Schnitt;
- Fig. 4: die Filtriervorrichtung gemäß den Figuren 1 bis 3 in Entlüftungsstellung von oben im Schnitt;
- Fig. 5: eine Filtriervorrichtung gemäß einer zweiten Ausführungsform in Produktionsstellung von oben im Schnitt;
- Fig. 6: die Filtriervorrichtung gemäß Fig. 5 in Rückspülstellung von oben im Schnitt;
- Fig. 7a: eine Filtriervorrichtung gemäß einer dritten Ausführungsform in Produktionsstellung in seitlicher Ansicht;
- Fig. 7b: eine Filtriervorrichtung gemäß der dritten Ausführungsform in Siebwechselstellung in seitlicher Ahnsicht und
- Fig. 8: die Filtriervorrichtung gemäß der dritten Ausführungsform im Querschnitt.

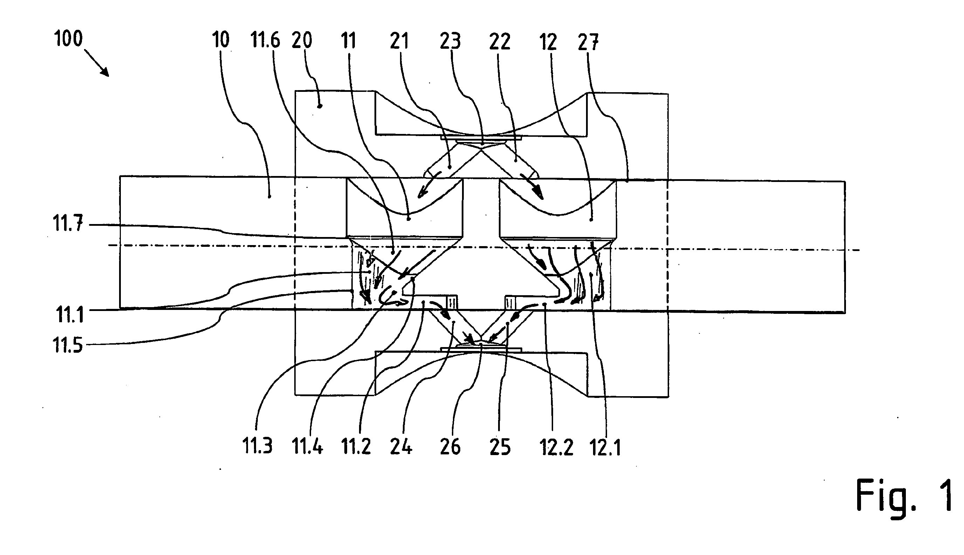

Fig. 1 zeigt eine Filtriervorrichtung 100, die im Wesentlichen aus einem Gehäuse 20 und einem Siebbolzen 10 besteht. Der insbesondere zylindrische Siebbolzen 10 ist in einer Siebbolzenbohrung 27 des Gehäuses 20 verschiebbar gelagert.

Auf der Eintrittsseite des Gehäuses 20 ist eine Zulauföffnung 23 vorgesehen, welche sich in zwei Gehäuseeintrittskanäle 21, 22 verzweigt. Jeder Gehäuseeintrittskanal 21, 22 steht mit einer Siebkavität 13, 14 im Siebbolzen 10 in Verbindung, wenn sich der Siebbolzen 10 in der in Fig. 1 gezeigten Produktionsstellung befindet.

Auf der anderen Seite des Gehäuses 20 ist eine Auslauföffnung 26 vorgesehen, an welcher sich zwei Gehäuseaustrittskanäle 24, 25 vereinigen. Die Gehäuseaustrittskanäle 24, 25 stehen jeweils mit der Reinseite der Siebkavitäten 13, 14 in Verbindung.

Innerhalb der Siebkavitäten 13, 14 sind Siebelemente 13.1 eingesetzt. In Durchflussrichtung gesehen hinter den Siebelementen 13.1 verjüngt sich die Siebkavität 11 jeweils in einen Trichterbereich 11.6. Während bei herkömmlichen Filtriervorrichtungen meist ein Siebbolzenaustrittskanal unmittelbar von der Spitze des Trichterbereichs 13.1 ausgeht, ist bei der erfindungsgemäßen Filtriervorrichtung 100 ein Siebbolzenaustrittskanal 11 mit einem Einlaufbereich 11.1 vorgesehen, der sich unmittelbar an den Trichterbereich 11.6 anschließt.

Die Eintrittszone 11.1 wird durch eine Flanke 11.2 begrenzt, die etwa von der Spitze des kegelförmigen Trichterbereichs 11.6 ausgeht und von dort ein Stück auf eine zweite Flanke 11.5 zuläuft. Die zweite Flanke 11.5 erstreckt sich etwa in Verlängerung der seitlichen Begrenzung der Siebkavität 11 und damit in etwa parallel zur Mittelachse der Siebkavität 11.

An einer Umlenkstelle 11.3 wird der Siebbolzenaustrittskanal 11 um einen Winkel von 90° oder auch weniger umgelenkt und geht in eine Austrittszone 11.2 über.

In der Austrittszone 11.2 verläuft der Siebbolzenaustrittskanal 11 dann als eine Nut weiter, welche bevorzugt etwa in Form einer Passfedernut ausgebildet ist, und geht schließlich in den Gehäuseaustrittskanal 24 über.

Gleiches gilt für die andere Siebstelle 12 auf der rechten Seite der in Fig. 1 gezeigten Filtriervorrichtung 100 mit einem Siebbolzenaustrittskanal 12, der ebenfalls eine Einlaufzone 12.1, eine Umlenkstelle 12.3 und eine Austrittszone 12.2 aufweist.

Beim dargestellten Ausführungsbeispiel verlaufen jeweils die äußeren Flanken 11.5, 12.5 der Eintrittszone 11.1, 12.1 parallel zur Fließrichtung, und die schrägen Flanken 11.2, 12.2 verlaufen beim dargestellten Ausführungsbeispiel von innen nach außen, wobei "innen" als die Mittelinie definiert ist, welche zwischen den Siebkavitäten 13, 14 verläuft, und welche damit in der gezeigten Produktionsstellung auch mittig durch die Zulauföffnung 23 und die Austrittsöffnung 26 verläuft.

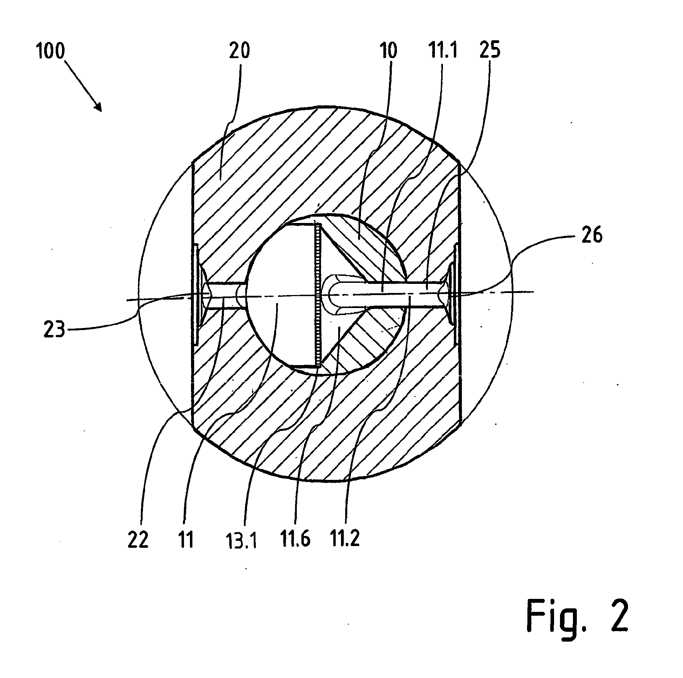

Während in Fig. 1 die Eintrittszonen 11.1, 12.1 dreieckig erscheint, erscheinen sie in einer Schnittebene quer durch den Siebbolzen 10, wie in Fig. 2 dargestellt, lediglich als eine dicke Scheibe, welche sich an den Trichterbereich 11.6 anschließt.

Die Funktion der erfindungsgemäßen Filtriervorrichtung wird nachfolgend erläutert:
Im normalen Produktionsbetrieb gemäß Figur 1 liegen beide Siebkavitäten 13, 14 vor den Eintrittskanälen 21, 22. Auf der Austrittsseite liegen die Mündungen der Austrittszonen 11.2, 12.2 ebenfalls vor den Mündungen der Austrittskanäle 24, 25. Die Schmelze kann gleichmäßig durch beide Siebkavitäten 13, 14 fließen und es stellt sich die durch die Pfeile angedeutete Strömungsverteilung ein.

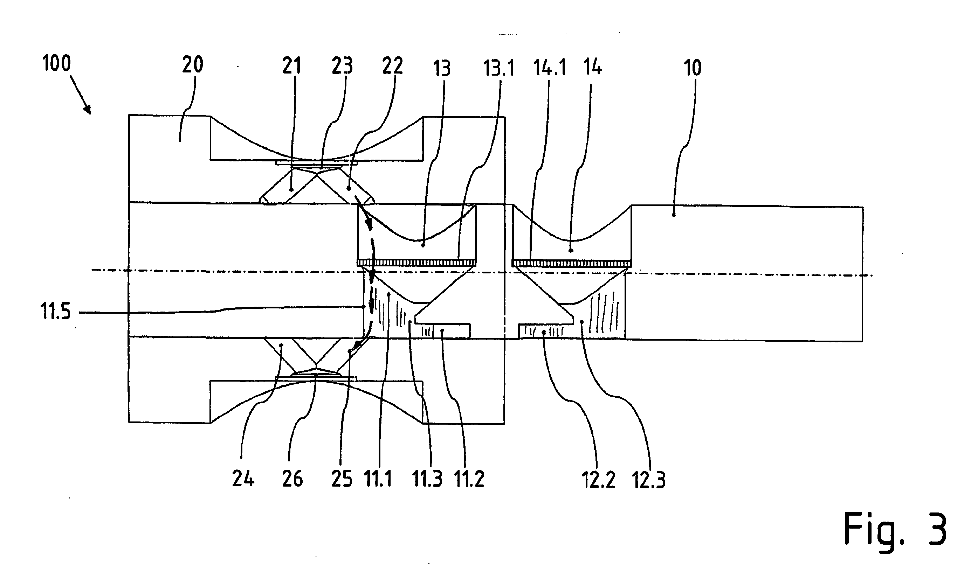

Bei Verschmutzung einer Siebstelle kann - wie in Figur 3 gezeigt - der Siebbolzen 10 so weit aus dem Gehäuse 20 verfahren werden, dass eine der Siebkavitäten 14 frei zugänglich außerhalb des Gehäuses 20 liegt. Dort kann die Siebkavität 14 einschließlich der Austrittszone 12.2 mühelos gereinigt werden. Das Siebelement 12.7 ist ebenfalls frei zugänglich, um herausgenommen und ersetzt zu werden.

Währenddessen kann Schmelze nach wie vor durch den Gehäuseeintrittskanal 22 hindurch bis in die Siebkavität 13 fließen und von dort über den Gehäuseaustrittskanal 25 wieder abfließen, sodass der Produktionsbetrieb nicht unterbrochen zu werden braucht.

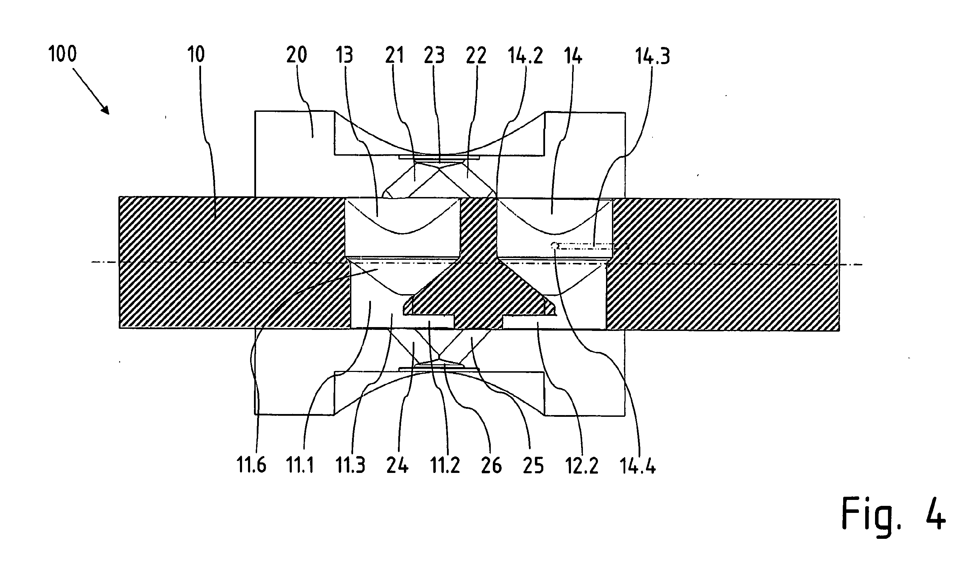

Nachdem die Siebkavität 12 gereinigt und ggf. mit einem neuen Siebeinsatz versehen ist, wird der Siebbolzen 10 wieder zurück in das Gehäuse 20 gefahren, jedoch zunächst noch nicht in die Produktionsstellung gemäß Fig. 1, sondern in eine in Fig. 4 gezeigte Stellung, in der eine allmähliche Befüllung der zuvor gereinigten Siebkavität 12 mit Schmelze und gleichzeitige Entlüftung der Siebkavität 12 erfolgt.

In dieser Stellung geht die Siebkavität 14 mit dem Gehäuseeintrittskanal 22 lediglich über eine sehr schmale Verbindungsstelle 14.2 in Verbindung, sodass nur ein sehr gebremster Schmelzefluss in die Siebkavität 14 hinein möglich ist. Schmelze kann sich somit in der Siebkavität 14 sammeln und die darin enthaltende Luft verdrängen.

Im oberen Bereich des Siebbolzens ist eine Entlüftungsnut 14.3 vorgesehen. Diese liegt real nicht, wie hier dargestellt, in der Schnittebene durch die Mittelachse, sondern oberhalb davon, auf dem Zylindermantel des Siebbolzens. Sie ist daher in Fig. 4 durch die strichpunktierte Linie nur angedeutet. Aufsteigende Luft kann aus der Bohrung 14.4 austreten und gelangt in die Nut 14.3, welche sich bis außerhalb der Gehäusekante des Gehäuses 20 erstreckt, sodass die Luft dort entweichen kann.

Nach dem Vorfluten der Siebkavität 12 und dem Entlüften wird dann der Siebbolzen 10 wieder in die in Fig. 1 gezeigte Produktionsstellung verfahren. Die Nut 14.3 liegt dann wieder vollständig innerhalb des Gehäuses 20 und ist somit in der Gehäusebohrung 27 abgedichtet.

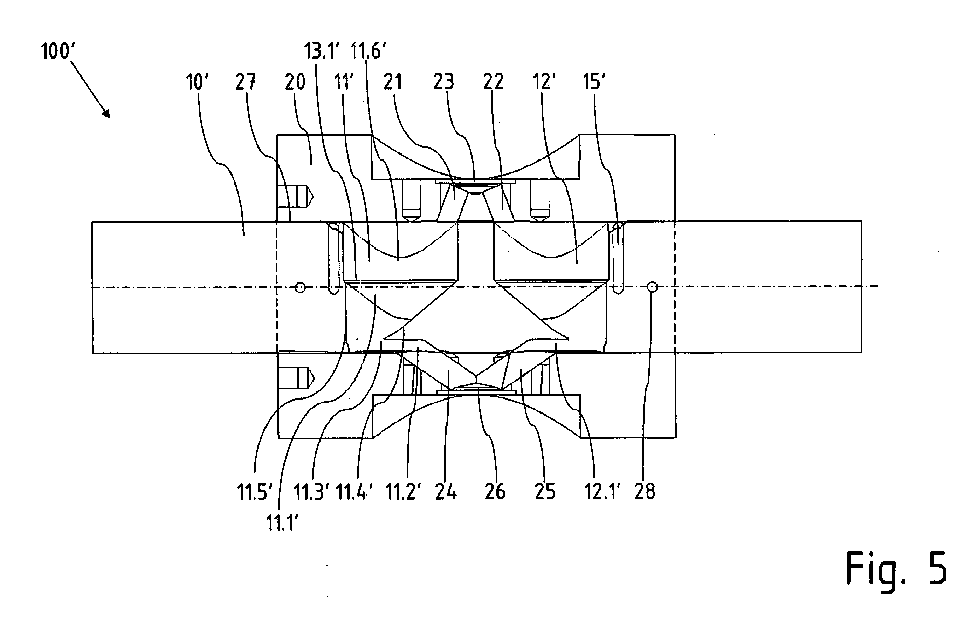

In Fig. 5 ist eine weitere Ausführungsform einer Filtriervorrichtung 100' dargestellt. Der Gehäuseaufbau des Gehäuses 20 entspricht der vorstehend beschriebenen Ausführungsform. Es sind lediglich unterhalb des Siebbolzens 10' zusätzliche Rückspülbohrungen 28 vorgesehen.

Der Siebbolzen 10' ist ebenfalls weitgehend ähnlich zum Siebbolzen 10 der ersten Ausführungsform. Die erfindungswesentliche Ausbildung des Siebbolzenaustrittskanals mit einer Eintrittszone 11.1' und einer Austrittszone 11.2' entspricht derjenigen bei der ersten Ausführungsform.

Unterschiedlich ist, dass neben den Siebkavitäten '13', 14' jeweils eine Rückspülöffnung 15' vorgesehen ist, welche mit den Rückspülbohrungen 28 im Gehäuse 20 in Übereinstimmung zu bringen ist.

In der in Fig. 5 gezeigten Position erfolgt ein normaler Produktionsbetrieb. Die beiden Siebkavitäten 13', 14' werden durch die Gehäuseeintrittskanäle 21, 22 gespeist.

Aus der Produktionsstellung gemäß Fig. 5 heraus kann der Siebbolzen 10' seitlich aus dem Gehäuse 20 verfahren werden, sodass eine der Siebkavitäten, in diesem Fall die rechte Siebkavität 14', von den Gehäuseeintrittskanälen 21, 22 vollständig abgeschnitten ist. Die Schmelze kann jetzt durch die linke Siebkavität 13 und deren Siebbolzenaustrittskanal 11 in den Auslaufkanal 24 und dann wieder über den Auslaufkanal 25 in die rechte Siebkavität 14' fließen, da auf der Schmutzseite der Siebkavität 14' kein Druck mehr ansteht.

Vielmehr besteht in dieser Position auf der Schmutzseite der Siebkavität 14' eine Verbindung zur Rückspülbohrung 15'. Die Schmelze kann darüber zu der Rückspülbohrung 28 im Gehäuse fließen und gelangt von dort an die Außenseite des Gehäuses 20. Grobe Schmutzpartikel, die auf der Schmutzseite der Siebelemente 13.1 anhaften, können durch die Rückspülung in an sich bekannter Weise gelöst werden.

Auch bei der zweiten Ausführungsform einer Filtriervorrichtung 100' kann der Siebbolzen 10' noch weiter nach außerhalb des Gehäuses 20 verfahren werden, sodass ein Siebwechsel analog zur Stellung in Fig. 3 möglich ist. Ebenso ist eine Entlüftung und Vorflutung der gereinigten Siebkavität analog zu der bei Fig. 4 beschriebenen Vorgehensweise möglich.

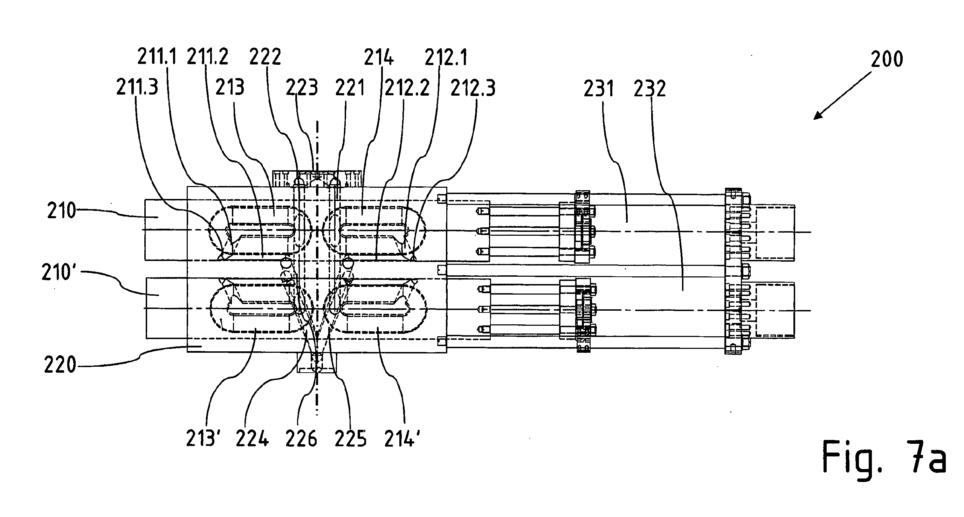

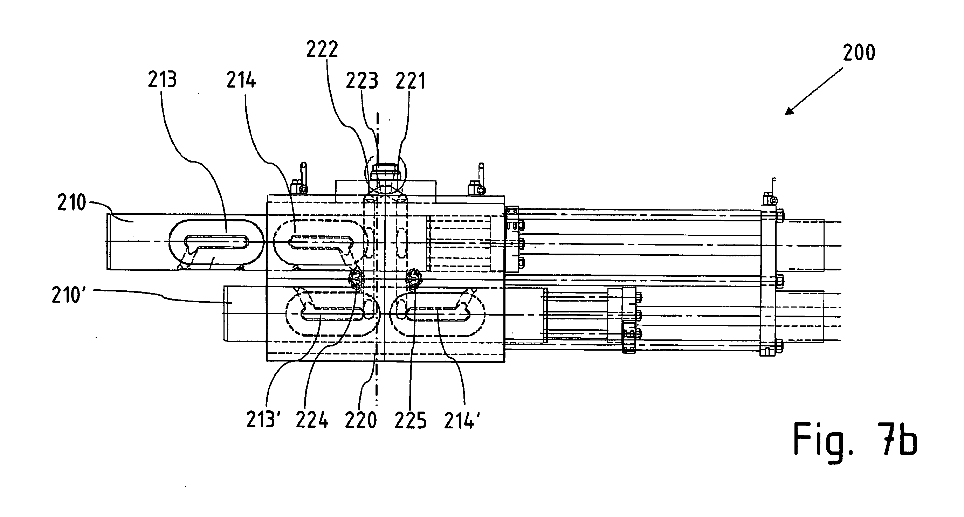

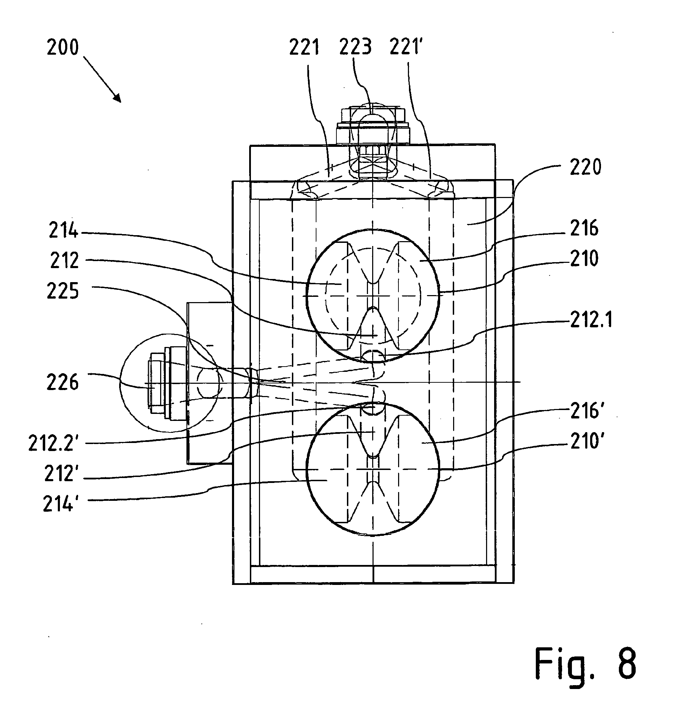

Eine dritte Ausführungsform einer Filtriervorrichtung 200 ist in den Figuren 7a, 7b und 8 dargestellt. Diese umfasst zwei identische Siebbolzen 210, 210', die über Hydraulikzylinder 231, 232 unabhängig voneinander in einem Gehäuse 220 verschiebbar sind.

Jeder Siebbolzen 210, 210' besitzt, wie in den Figuren 7a und 7b erkennbar, zwei Siebkavitäten 213, 214, 213', 214' nebeneinander und darüber hinaus, wie wiederum im Querschnitt nach Figur 8 erkennbar, die gleiche Anzahl von Siebkavitäten auf der rückwärtigen Seite noch einmal, so dass die Filtriervorrichtung 200 insgesamt acht Siebkavitäten besitzt.

In Figur 7a ist die Produktionsstellung in seitlicher Ansicht auf die Filtriervorrichtung 200 gezeigt, in der beide Siebbolzen 210, 210' so positioniert sind, dass alle Siebkavitäten 213, 214, 213', 214' durchströmt werden.

Das Fluid strömt über eine Zulauföffnung 223 oben im Gehäuse in davon abzweigende Gehäuseeintrittskanäle 221, 222 bis in die Siebkavitäten 213, 214, 213', 214', die jeweils wenigstens ein Filterelement aufweisen, das hier nicht dargestellt ist.

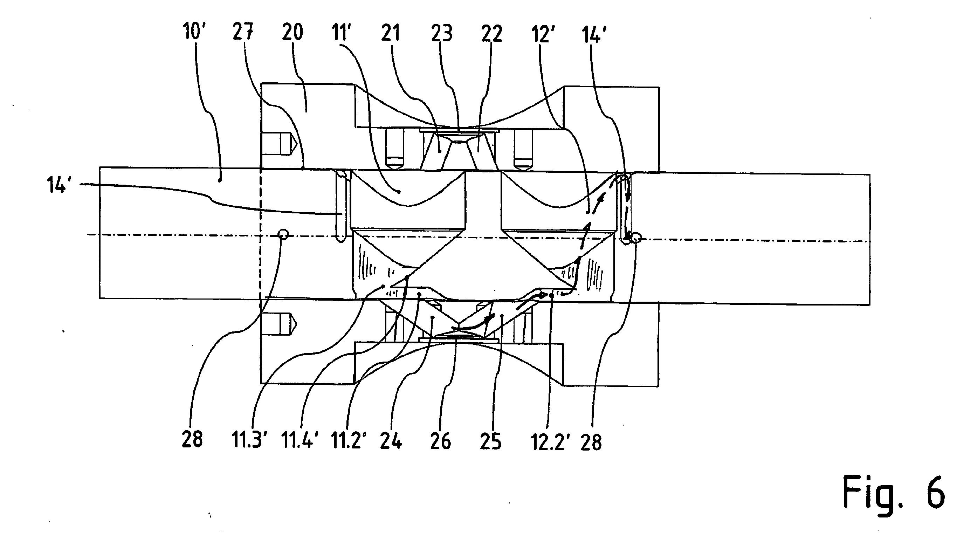

In Strömungsrichtung hinter den Filterelementen ist jeweils - in gleicher Weise wie bei den Ausführungsformen nach den Figuren 1 bis 6 auch - ein Trichterbereich vorhanden, in dem das Fluid gesammelt und zu einer Einlaufzone 211.1, 212.1 eines Siebbolzenaustrittskanals 211, 212 geleitet wird, die in einem Randbereich der jeweiligen Siebkavität 213, 214, 213', 214' ihren Anfang nimmt. Daran schließt sich im Siebbolzenaustrittskanal 211, 212 jeweils eine Umlenkstelle 211.3, 212.3 an, wo ein Übergang in die Austrittszone 211.2, 212.2 erfolgt. Letztere verläuft parallel zur Mittelachse der Siebbolzen 210, 210', bis sie in die V-förmig voneinander abgespreizten Gehäuseaustrittskanäle 224, 225 münden. Die Gehäuseaustrittskanäle 224, 225 führen zu einer gemeinsamen Auslauföffnung 226 unten am Gehäuse 220.

Figur 7b zeigt eine Situation, in der sich der obere Siebbolzen 210 in einer sogenannten Siebwechselstellung befindet. Dabei sind die links außen sichtbare Siebkavität 213 sowie die zugehörige Siebkavität desselben Paars auf der rückwärtigen Seite des Siebbolzens 210 außerhalb des Gehäuses 220 positioniert. Die Siebkavitäten 213 können gereinigt und die darin befindlichen Filterelemente können entnommen werden. Die rechte Siebkavität 214 besitzt währenddessen eine Verbindung mit dem linken Gehäuseaustrittskanal 224 und kann so weiterhin voll genutzt werden.

Figur 8 zeigt einen Querschnitt entlang der strichpunktierten Linie in Figur 7a, welche durch die Zulauf- und die Auslauföffnung 223, 226 läuft.

Die in den Figuren 7a und 7b von der Seite sichtbaren Siebkavitäten 214, 214' besitzen auf der anderen Seite der Siebbolzen 210, 210' Gegenstücke in Form der Siebkavitäten 216, 216'.

Die gestrichelten Linien geben den Verlauf der Gehäuseeintrittskanäle 221, 221' und Gehäuseaustrittskanäle 225 an. Um die insgesamt acht Siebkavitäten der Filtriervorrichtung 200 versorgen zu können, sind vier senkrechte Gehäuseeintrittskanäle 221, 221' vorgesehen, die von der Zulauföffnung 223 zunächst verzweigen und dann beidseits der Siebbolzen 210, 210' nach unten führen, wobei sie tangential die Siebkavitäten 214, 216, 214', 216' schneiden. Zugleich sind vier Gehäuseaustrittskanäle 225 vorgesehen, die sowohl in Längsrichtung von einer Auslauföffnung 226 verzweigen (vgl. Fig. 7a, 7b) bzw. in dieser münden wie auch in der Höhe (vgl. Fig. 8) so abgespreizt sind, dass sie den oberen Siebbolzen 210 unten und den unteren Siebbolzen 210' oben anschneiden.

Deutlich sichtbar sind in dieser Darstellung die nutenförmigen Austrittszonen 212.2, 212.2', die mit den Gehäuseaustrittskanälen 225 in Verbindung stehen.

## Patentansprüche

1. Filtriervorrichtung (100; 100'; 200) für hochviskose Medien, mit wenigstens einem Siebbolzen (10; 10'; 210, 210'), der zwischen einer Zulauföffnung (23; 223) und einer Auslauföffnung (26; 226) eines Gehäuses (20; 220) verschiebbar in einer Siebbolzenbohrung (27; 227) angeordnet ist und der wenigstens eine Siebkavität (13, 14; 13', 14'; 213, 214, 216, 213', 214', 216') aufweist,
- in welcher wenigstens ein Filterelement (13.1) angeordnet ist,
- welche in einer Produktionsstellung mit dem Gehäuseein- und Gehäuseaustrittskanal (21, 22, 24, 25; 221, 222, 224, 225) des Gehäuses (20; 220) in Verbindung zu bringen ist,
- und welche sich in einem in Durchflussrichtung der Siebkavität (13, 14; 13', 14'; 213, 214, 213', 214', 216, 216') gesehen hinteren Bereich zu einem Trichterabschnitt (11.6; 11.6') verjüngt, welcher in wenigstens einem Siebbolzenaustrittskanal (11, 12; 211, 212) mündet, der in einer Produktionsstellung an einem Gehäuseaustrittskanal (24, 25; 224, 225) mündet,
**dadurch gekennzeichnet, dass** der Siebbolzenaustrittskanal (11, 12; 211, 212) wenigstens eine Eintrittszone (11.1, 12.1; 11.1', 12.1'), wenigstens eine Umlenkungsstelle (11.3; 11.3') und wenigstens eine Austrittszone (11.2, 12.2; 11.2', 12.2') umfasst, wobei die Eintrittszone (11.1, 12.1; 11.1', 12.1') von einem Randbereich des Trichterabschnitts (11.6; 11.6') ausgeht und wobei die Austrittszone (11.2, 12.2; 11.2', 12.2') als eine sich auf der Außenseite des Siebbolzens (10; 10'; 210, 210') und/oder auf der Innenseite der Siebbolzenbohrung (27; 227) erstreckende Nut ausgebildet ist.

2. Filtriervorrichtung (100; 100'; 200) nach Anspruch 1, **dadurch gekennzeichnet, dass** die jeweils vor und hinter der Umlenkungsstelle (11.3, 12.3; 11.3', 12.3', 211.3, 212.3) liegenden Zonen des Siebbolzenaustrittskanals (11, 12; 11', 12'; 211, 212, 212') miteinander einen Winkel von 90° oder weniger einschließen.

3. Filtriervorrichtung (100; 100'; 200) nach Anspruch 1 oder 2, **dadurch gekennzeichnet, dass** die Eintrittszone (11.1, 12.1; 11.1', 12.1'; 211.1, 212.1) des Siebbolzenaustrittskanals (11, 12; 11', 12'; 211, 212, 212') in einem Querschnitt senkrecht zur Mittelachse des Siebbolzens (10; 10'; 210, 210') gesehen dreieckig ist und durch eine schräg zur Fließrichtung ausgerichtete erste, zentrale Flanke (11.4; 11.4'), die vom Zentrum des Trichterbereichs (11.6; 11.6') nach außen führt, und durch eine zweite, in Durchflussrichtung ausgerichtete Flanke (11.5) an der Peripherie der Eintrittszone (11.1, 12.1; 11.1', 12.1'; 211.1, 212.1) begrenzt ist.

4. Filtriervorrichtung (100; 100'; 200) nach Anspruch 3, **dadurch gekennzeichnet, dass** die erste Flanke (11.4; 11.4') und die Austrittszone (11.2, 12.2; 11.2', 12.2') einen Winkel von 30° bis 60° einschließen.

5. Filtriervorrichtung (100; 100'; 200) nach Anspruch 3 oder 4, **dadurch gekennzeichnet, dass** sich im Querschnitt gesehen die erste Flanke (11.4; 11.4') in Verlängerung des Trichterbereichs (11.6, 11.6') erstreckt.

6. Filtriervorrichtung (100; 100'; 200) nach wenigstens einem der Ansprüche 1 bis 5, **dadurch gekennzeichnet, dass** die Eintrittszone (11.1, 12.1; 11.1', 12.1'; 211.1, 212.1) ein zu einer Querschnittsebene ausgerichteter, scheibenförmiger Hohlraum ist, der sich an den hohlkegelförmigen Trichterbereich (11.6; 11.6') anschließt.

7. Filtriervorrichtung (100; 100'; 200) nach wenigstens einem der Ansprüche 1 bis 6, **dadurch gekennzeichnet, dass** sich die Austrittszone (11.2, 12.2; 11.2', 12.2'; 211.2, 212.2) auf der Außenseite des Siebbolzens (10; 10'; 210, 210') und parallel zu dessen Mittelachse erstreckt.

8. Filtriervorrichtung (200) nach wenigstens einem der Ansprüche 1 bis 7, **dadurch gekennzeichnet, dass** im Gehäuse (220) zwei unabhängig voneinander verschiebbare Siebbolzen (210; 210') angeordnet sind.

9. Filtriervorrichtung (100; 100') nach wenigstens einem der Ansprüche 1 bis 8, **dadurch gekennzeichnet, dass** jeder Siebbolzen (10; 10')zwei Siebkavitäten (13, 14; 13', 14'; 213, 214, 216, 213', 214', 216') aufweist.

10. Filtriervorrichtung (200) nach wenigstens einem der Ansprüche 1 bis 8, **dadurch gekennzeichnet, dass** jeder Siebbolzen (210; 210') jeweils zwei Paare von Siebkavitäten (213, 214, 213', 214' 216') aufweist

11. Filtriervorrichtung (200) nach Anspruch 9, **dadurch gekennzeichnet, dass** die beiden Siebkavitäten (213, 214, 216, 213', 214', 216') eines Paares an diametral gegenüber liegenden Seiten des Siebbolzens (210; 210') angeordnet sind.

## Claims

1. Filtering apparatus (100; 100'; 200) for highly viscous media, having at least one screen piston (10; 10'; 210, 210'), which is arranged in a screen-piston bore (27; 227) such that it can be displaced between an inflow opening (23; 223) and an outflow opening (26; 226) of a housing (20; 220) and which has at least one screen cavity (13, 14, 13', 14'; 213, 214, 216, 213', 214', 216'),
- in which at least one filter element (13.1) is arranged,
- which, in a production position, can be connected to the entrance channel and discharge channel (21, 22, 24, 25; 221, 222, 224, 225) of the housing (20; 220),
- and which tapers in a rear region, as seen in the throughflow direction of the screen cavity (13, 14; 13', 14'; 213, 214, 213', 214', 216, 216'), to form a funnel portion (11.6; 11.6') which opens out in at least one screen-piston discharge channel (11, 12; 211, 212), which opens out, in a production position, at a housing discharge channel (24, 25; 224, 225),
**characterized in that** the screen-piston discharge channel (11, 12; 211, 212) comprises at least one entrance zone (11.1, 12.1; 11.1', 12.1'), at least one deflecting location (11.3; 11.3') and at least one discharge zone (11.2, 12.2; 11.2', 12.2'), wherein the entrance zone (11.1, 12.1; 11.1', 12.1') extends from a peripheral region of the funnel portion (11.6; 11.6'), and wherein the discharge zone (11.2, 12.2; 11.2', 12.2') is designed as a groove which extends on the outside of the screen piston (10; 10'; 210, 210') and/or on the inside of the screen-piston bore (27; 227)

2. Filtering apparatus (100; 100'; 200) according to Claim 1, **characterized in that** those zones of the screen-piston discharge channel (11, 12; 11', 12'; 211, 212, 212') which are located in each case upstream and downstream of the deflecting location (11.3, 12.3; 11.3', 12.3', 211.3, 212.3) enclose an angle of 90° or less with one another.

3. Filtering apparatus (100; 100'; 200) according to Claim 1 or 2, **characterized in that** the entrance zone (11.1, 12.1; 11.1', 12.1'; 211.1, 212.1) of the screen-piston discharge channel (11, 12; 11', 12'; 211, 212, 212') is triangular, as seen in a cross section perpendicular to the centre axis of the screen piston (10; 10'; 210, 210'), and is bounded by a first, central flank (11.4; 11.4'), which is oriented obliquely in relation to the direction of flow and leads outwards from the centre of the funnel region (11.6; 11.6'), and by a second flank (11.5), oriented in the throughflow direction, at the periphery of the entrance zone (11.1, 12.1; 11.1', 12.1'; 211.1, 212.1).

4. Filtering apparatus (100; 100'; 200) according to Claim 3, **characterized in that** the first flank (11.4; 11.4') and the discharge zone (11.2, 12.2; 11.2', 12.2') enclose an angle of 30° to 60°.

5. Filtering apparatus (100; 100'; 200) according to Claim 3 or 4, **characterized in that**, as seen in cross section, the first flank (11.4; 11.4') runs in extension of the funnel region (11.6, 11.6').

6. Filtering apparatus (100; 100'; 200) according to at least one of Claims 1 to 5, **characterized in that** the entrance zone (11.1, 12.1; 11.1', 12.1'; 211.1, 212.1) is a disc-shaped cavity which is oriented in relation to a cross-sectional plane and follows the hollow-cone-shaped funnel region (11.6; 11.6').

7. Filtering apparatus (100; 100'; 200) according to at least one of Claims 1 to 6, **characterized in that** the discharge zone (11.2, 12.2; 11.2', 12.2'; 211.2, 212.2) extends on the outside of the screen piston (10; 10'; 210, 210') and parallel to the centre axis thereof.

8. Filtering apparatus (200) according to at least one of Clams 1 to 7, **characterized in that** two screen pistons (210; 210'), which can be displaced independently of one another, are arranged in the housing (220).

9. Filtering apparatus (100; 100') according to at least one of Claims 1 to 8, **characterized in that** each screen piston (10; 10') has two screen cavities (13, 14; 13', 14'; 213, 214, 216, 213', 214', 216').

10. Filtering apparatus (200) according to at least one of Clams 1 to 8, **characterized in that** each screen piston (210; 210') has in each case two pairs of screen cavities (213, 214, 213', 214', 216')

11. Filtering apparatus (200) according to Claim 9, **characterized in that** the two screen cavities (213, 214, 216, 213', 214', 216') of a pair are arranged on diametrically opposite sides of the screen piston (210; 210').

## Revendications

1. Dispositif de filtration (100 ; 100' ; 200) pour milieux hautement visqueux, comprenant au moins un bloc filtrant (10 ; 10' ; 210, 210') qui est disposé de manière à pouvoir être déplacé dans un alésage de bloc filtrant (27 ; 227) entre une ouverture d'amenée (23 ; 223) et une ouverture de sortie (26 ; 226) d'un boîtier (20 ; 220) et qui présente au moins une cavité de filtre (13, 14 ; 13', 14' ; 213, 214, 216, 213', 214', 216'),
- dans laquelle cavité de filtre est disposé au moins un élément filtrant (13.1),
- laquelle cavité de filtre doit être amenée en liaison dans une position de production avec le canal d'entrée du boîtier et le canal de sortie du boîtier (21, 22, 24, 25 ; 221, 222, 224, 225) du boîtier (20 ; 220),
- et laquelle se rétrécit dans une région arrière, vu dans la direction d'écoulement de la cavité de filtre (13, 14 ; 13', 14' ; 213, 214, 213', 214', 216, 216'), jusqu'à une section en entonnoir (11.6 ; 11.6'), laquelle débouche dans au moins un canal de sortie du bloc filtrant (11, 12 ; 211, 212) qui débouche dans une position de production au niveau d'un canal de sortie du boîtier (24, 25 ; 224, 225),
**caractérisé en ce que** le canal de sortie du bloc filtrant (11, 12 ; 211, 212) comprend au moins une zone d'entrée (11.1, 12.1 ; 11.1', 12.1'), au moins un point de renvoi (11.3 ; 11.3') et au moins une zone de sortie (11.2, 12.2 ; 11.2', 12.2'), la zone d'entrée (11.1, 12.1 ; 11.1', 12.1') partant d'une région de bord de la section en entonnoir (11.6 ; 11.6') et la zone de sortie (11.2, 12.2 ; 11.2', 12.2') étant réalisée sous forme de rainure s'étendant du côté extérieur du bloc filtrant (10 ; 10' ; 210, 210') et/ou du côté intérieur de l'alésage de bloc filtrant (27 ; 227).

2. Dispositif de filtration (100 ; 100' ; 200) selon la revendication 1, **caractérisé en ce que** les zones du canal de sortie du boîtier (11, 12 ; 11', 12' ; 211, 212, 212') situées à chaque fois devant et derrière le point de renvoi (11.3 , 12.3 ; 11.3', 12.3', 211.3, 212.3) forment entre elles un angle de 90° ou moins.

3. Dispositif de filtration (100 ; 100' ; 200) selon la revendication 1, **caractérisé en ce que** la zone d'entrée (11.1, 12.1 ; 11.1', 12.1' ; 211.1, 212.1) du canal de sortie du boîtier (11, 12 ; 11', 12' ; 211, 212, 212'), vu en section transversale perpendiculairement à l'axe médian du bloc filtrant (10 ; 10' ; 210, 210'), est triangulaire et est limitée par un premier flanc central (11.4 ; 11.4') orienté obliquement par rapport à la direction d'écoulement, lequel conduit vers l'extérieur depuis le centre de la région en entonnoir (11.6 ; 11.6'), et par un deuxième flanc (11.5) orienté dans la direction d'écoulement au niveau de la périphérie de la zone d'entrée (11.1, 12.1 ; 11.1', 12.1' ; 211.1, 212.1).

4. Dispositif de filtration (100 ; 100' ; 200) selon la revendication 3, **caractérisé en ce que** le premier flanc (11.4 ; 11.4') et la zone de sortie (11.2, 12.2 ; 11.2', 12.2') forment un angle de 30° à 60°.

5. Dispositif de filtration (100 ; 100' ; 200) selon la revendication 3 ou 4, **caractérisé en ce que**, vu en section transversale, le premier flanc (11.4 ; 11.4') s'étend dans le prolongement de la région en entonnoir (11.6, 11.6').

6. Dispositif de filtration (100 ; 100' ; 200) selon au moins l'une quelconque des revendications 1 à 5, **caractérisé en ce que** la zone d'entrée (11.1, 12.1 ; 11.1', 12.1' ; 211.1, 212.1) est une cavité en forme de disque orientée vers un plan en section transversale et qui se raccorde à la région en entonnoir en forme de cône creux (11.6 ; 11.6').

7. Dispositif de filtration (100 ; 100' ; 200) selon au moins l'une quelconque des revendications 1 à 6, **caractérisé en ce que** la zone de sortie (11.2, 12.2 ; 11.2', 12.2' ; 211.2, 212.2) s'étend du côté extérieur du bloc filtrant (10 ; 10' ; 210, 210') et parallèlement à son axe médian.

8. Dispositif de filtration (200) selon au moins l'une quelconque des revendications 1 à 7, **caractérisé en ce que** dans le boîtier (220) sont disposés deux blocs filtrants (210 ; 210') déplaçables indépendamment l'un de l'autre.

9. Dispositif de filtration (100 ; 100') selon au moins l'une quelconque des revendications 1 à 8, **caractérisé en ce que** chaque bloc filtrant (10 ; 10') présente deux cavités de filtre (13, 14 ; 13', 14' ; 213, 214, 216, 213', 214', 216').

10. Dispositif de filtration (200) selon au moins l'une quelconque des revendications 1 à 8, **caractérisé en ce que** chaque bloc filtrant (210 ; 210') présente à chaque fois deux paires de cavités de filtre (213, 214, 213', 214', 216').

11. Dispositif de filtration (200) selon la revendication 9, **caractérisé en ce que** les deux cavités de filtre (213, 214, 216, 213', 214', 216') d'une paire sont disposées sur des côtés du bloc filtrant (210 ; 210') diamétralement opposés.
